# EUROPÄISCHE PATENTSCHRIFT

(11) **EP 3 301 324 B1**
(45) Veröffentlichungstag und Bekanntmachung des Hinweises auf die Patenterteilung: **21.08.2019**
(21) Anmeldenummer: 17192578.7
(22) Anmeldetag: 22.09.2017
(51) Int. Cl.: F16H 1/32

(54) **ZYKLOIDGETRIEBE**
CYCLOID GEAR
TRAIN D'ENGRENAGE DE TYPE ROUE CYCLOÏDALE

(30) Priorität: 29.09.2016 DE 102016118427
(43) Veröffentlichungstag der Anmeldung: 04.04.2018
(73) Patentinhaber: Schunk GmbH & Co. KG Spann- und Greiftechnik, 74348 Lauffen am Neckar (DE)
(72) Erfinder: Schäfer, Marco, 74199 Untergruppenbach (DE); Becker, Ralf, 71672 Marbach (DE); Kunz, Gregory, 74354 Besigheim (DE)
(74) Vertreter: DREISS Patentanwälte PartG mbB

(56) Entgegenhaltungen:
- WO-A1-94/23223
- US-A- 4 898 065
- US-A1- 2004 198 543

## Beschreibung

Die Erfindung betrifft ein Zykloidgetriebe mit einer ersten Getriebestufe, die eine erste und eine zweite jeweils Kurvenabschnitte aufweisende Kurvenscheibe aufweist, welche durch eine Mehrzahl von Mitnehmerbolzen gekoppelt sind, mit einer um eine Getriebeachse drehbar antreibbaren Antriebswelle, die mit den Kurvenscheiben der ersten Getriebestufe exzentrisch bewegungsgekoppelt ist, und mit wenigstens einer ersten koaxial zur Getriebeachse angeordneten Abtriebswelle.

Zykloidgetriebe sind aus dem Stand der Technik bekannt. Zykloidgetriebe sind Exzentergetriebe. Bei derartigen Exzentergetrieben übertragen Kurvenscheiben ein Drehmoment wälzend. Ein Exzenter treibt dazu eine Kurvenscheibe mit zykloidischen Kurvenabschnitten der Anzahl n an, die sich in einem Bolzenring mit n+1 Bolzen abwälzt. Eine Zykloide ist eine Bahn, die ein Kreispunkt beim Abrollen eines Kreises auf einer Leitkurve, bspw. auf einer Geraden beschreibt.

Beim Abwälzen der Kurvenscheibe über die Bolzen des Bolzenrings bewegt sich bei jeder Umdrehung der Antriebswelle die Kurvenscheibe um einen Kurvenabschnitt weiter. Auf diese Weise entstehen kleinere Drehzahlen entgegen der Antriebsrotation.

Ein einstufiges Zykloidgetriebe ist bspw. aus der WO 2014/154340 A1 bekannt. Aus der US 4898065A, der WO 94/23223 A1 oder der US 2004/198543 A1 sind Zykloidgetriebe mit Merkmalen des Oberbegriffs des Anspruchs 1 bekannt.

Die aus dem Stand der Technik bekannten einstufigen Zykloidgetriebe haben dabei den Nachteil, dass sie im Grad ihrer Untersetzung und im Grad der Miniaturisierung begrenzt sind. Dabei ist der Einsatz im Bereich der Feinwerktechnik bislang, trotz wesentlicher Vorteile von Zykloidgetrieben, nicht möglich.

Insbesondere führt der Versuch, mit den bekannten Zykloidgetrieben hohe Untersetzungen zu erreichen zu einer feinen Teilung der Kurvenscheiben, d.h. zu sehr kleinen Kurvenabschnitten und zu sehr kleinen Durchmessern der Bolzen des Bolzenrings. Dies führt zwangsläufig zu einer geringeren Festigkeit und einem damit einhergehenden, geringeren übertragbaren Drehmoment. Ferner sind derartig kleine Kurvenabschnitte und Bolzen schwierig zu fertigen und entsprechend teuer.

Die Erfindung stellt sich daher die Aufgabe, ein Zykloidgetriebe bereitzustellen, mit dem große Untersetzungen bei großen übertragbaren Drehmomenten übertragbar sind, wobei das Zykloidgetriebe kostengünstig herstellbar sein soll.

Diese Aufgabe wird durch ein Zykloidgetriebe mit den Merkmalen des Anspruchs 1 gelöst. Das Zykloidgetriebe zeichnet sich dadurch aus, dass eine zweite Getriebestufe vorgesehen ist, die eine erste und eine zweite jeweils Kurvenabschnitte aufweisende Kurvenscheibe aufweist, welche durch eine Mehrzahl von Mitnehmerbolzen gekoppelt sind, wobei die Kurvenscheiben der zweiten Getriebestufe mit der ersten Abtriebswelle exzentrisch bewegungsgekoppelt sind. Vorteilhafterweise sind die beiden Getriebestufen dabei koaxial zur Drehachse angeordnet. Mit einem derartigen Zykloidgetriebe kann eine axiale Hintereinanderschaltung der beiden Getriebestufen erreicht werden, so dass ein Zykloidgetriebe mit einer insgesamt größeren Untersetzung bereitgestellt werden kann, mit dem auch große Drehmomente übertragbar sind. Um eine insgesamt noch größere Übersetzung zu erreichen, ist es auch denkbar mehr als zwei Getriebestufen axial hintereinanderzuschalten. Vorteilhafterweise erfolgt die Bewegungskopplung der ersten und zweiten Kurvenscheibe der beiden Getriebestufen dadurch, dass in den Kurvenscheiben auf einer gedachten Kreisbahn angeordnete kreisförmige Bohrungen vorgesehen sind, in denen die Mitnehmerbolzen abwälzen, die ebenfalls auf einer gedachten Kreisbahn angeordnet sind und einen kleineren Durchmesser als die kreisförmigen Bohrungen aufweisen.

Erfindungsgemäß ist ferner vorgesehen, dass ein konzentrisch zur Getriebeachse angeordneter Bolzenring vorgesehen ist und dass die Kurvenscheiben der ersten Getriebestufe und die Kurvenscheiben der zweiten Getriebestufe derart angeordnet und ausgebildet sind, dass die Kurvenscheiben beider Getriebestufen gemeinsam im Bolzenring abwälzen.

Der Bolzenring weist eine Mehrzahl von parallel zur Getriebeachse angeordneten Wälzbolzen auf, wobei die die Wälzbolzen drehbar gelagert sind. Die Wälzbolzen sind dabei parallel zur Getriebeachse auf einem konzentrisch zur Getriebeachse angeordneten Bolzenring angeordnet.

In einer vorteilhaften Weiterbildung des Zykloidgetriebes ist vorgesehen, dass die erste Getriebestufe und die zweite Getriebestufe koaxial zur Getriebeachse und in Achsrichtung hintereinander angeordnet sind. Vorteilhafterweise ist dabei die erste Getriebestufe antriebswellenseitig vorgesehen, wobei die zweite Getriebestufe abtriebswellenseitig vorgesehen ist.

Um ein Antriebsmoment und eine Antriebsdrehzahl in die erste Getriebestufe einzuleiten ist es besonders vorteilhaft, wenn die erste und die zweite Kurvenscheibe der ersten Getriebestufe exzentrisch zur Getriebeachse auf der Antriebswelle gelagert sind.

In einer besonders vorteilhaften Weiterbildung des Zykloidgetriebes ist vorgesehen, dass die Antriebswelle als Hohlwelle ausgebildet ist. Mit einer derartigen hohlen Antriebswelle kann eine Art Mittendurchlass im Zykloidgetriebe derart realisiert werden, dass Kabel und andere Bauteile mittig durch das Zykloidgetriebe hindurchgeführt werden können.

Um Schmutz und andere Verunreinigungen von dem Zykloidgetriebe fernzuhalten ist es besonders vorteilhaft, wenn ein Getriebegehäuse vorgesehen ist. Ferner ist es besonders vorteilhaft, wenn die Antriebswelle konzentrisch zur Getriebeachse angeordnete Lagerabschnitte zur Lagerung der Antriebswelle im Getriebegehäuse aufweist.

Weiterhin ist es vorteilhaft, wenn die erste Abtriebswelle konzentrisch zur Getriebeachse angeordnete Lagerabschnitte zur Lagerung der ersten Abtriebswelle im Getriebegehäuse aufweist.

Um eine zweite Untersetzung bereitzustellen hat es sich als vorteilhaft erwiesen, wenn eine zweite koaxial zur Getriebeachse angeordnete Abtriebswelle vorgesehen ist, wobei die Kurvenscheiben der ersten Getriebestufe mit der zweiten Abtriebswelle exzentrisch bewegungsgekoppelt sind. Somit kann mit der ersten Abtriebswelle eine größere Untersetzung am Zykloidgetriebe abgegriffen werden, die sich aus der Untersetzung der ersten und der zweiten Getriebestufe zusammensetzt, wobei mit der zweiten Abtriebswelle die Untersetzung der ersten Getriebestufe abgegriffen werden kann.

Eine weitere vorteilhafte Ausgestaltung des Zykloidgetriebes sieht vor, dass die erste und die zweite Kurvenscheibe der zweiten Getriebestufe exzentrisch zur Getriebeachse auf der zweiten Antriebswelle gelagert sind.

In einer besonders vorteilhaften Weiterbildung des Zykloidgetriebes ist vorgesehen, dass die erste und die zweite Abtriebswelle als Hohlwelle ausgebildet und konzentrisch zur Getriebesachse angeordnet sind, wobei die erste Abtriebswelle die zweite Abtriebswelle zumindest abschnittsweise umgreift. Vorteilhafterweise ist die erste Abtriebswelle koaxial zur Antriebswelle angeordnet. Somit kann ein Mittendurchlass nicht nur durch die Antriebswelle bereitgestellt werden. Vielmehr können Kabel und andere Bauteile durch den Mittendurchlass der Antriebswelle und der ersten Abtriebswelle hindurchgeführt werden.

Besonders bevorzugt ist es dabei, wenn die zweite Abtriebswelle einen konzentrisch zur Getriebeachse angeordneten Lagerabschnitt zur Lagerung der ersten Abtriebswelle aufweist.

Weiterhin ist es vorteilhaft, wenn die erste Getriebestufe einen Abtriebswellenflansch aufweist, wobei die Mitnehmerbolzen der ersten Getriebestufe mit dem Abtriebswellenflansch der ersten Getriebestufe exzentrisch bewegungsgekoppelt (drehfest gekoppelt) sind und wobei der Abtriebswellenflansch mit der zweiten Abtriebswelle drehgekoppelt ist. Somit kann eine Untersetzung der ersten Getriebestufe vom Abtriebswellenflansch über die mit dem Abtriebswellenflansch drehgekoppelte zweite Abtriebswelle außerhalb des Gehäuses des Zykloidgetriebes weitergegeben werden.

Eine weitere besonders vorteilhafte Ausgestaltung des Zykloidgetriebes sieht vor, dass die Kurvenscheiben der ersten Getriebestufe in Richtung der Getriebeachse eine erste Dicke aufweisen, wobei die Kurvenscheiben der zweiten Getriebestufe in Richtung der Getriebeachse eine zweite Dicke aufweisen, wobei die zweite Dicke größer ist als die erste Dicke. Dies ist besonders vorteilhaft, da mit der zweiten Getriebestufe eine Übertragung von Drehmomenten auf die erste Abtriebswelle möglich ist, die größer sind als Drehmomente, die mit der ersten Getriebestufe auf die zweite Abtriebswelle übertragen werden können.

Als besonders vorteilhaft hat es sich dabei erwiesen, wenn die zweite Dicke zur ersten Dicke in einem Verhältnis im Bereich von etwa 1,5:1 bis etwa 4:1 steht.

In einer Ausführungsform des Zykloidgetriebes weisen die Kurvenscheiben der ersten Getriebestufe und der zweiten Getriebestufe eine identische Kurvengeometrie auf.

In einer besonders vorteilhaften Ausführungsform des Zykloidgetriebes ist vorgesehen, dass die Kurvenabschnitte der Kurvenscheiben der ersten Getriebestufe Kurvenberge und Kurventäler umfassen, wobei ein radialer Abstand der Kurvenberge und der Kurventäler eine erste Eingriffstiefe der Kurvenscheiben der ersten Getriebestufe definiert, und dass die Kurvenabschnitte der Kurvenscheiben der zweiten Getriebestufe Kurvenberge und Kurventäler umfassen, wobei ein radialer Abstand der Kurvenberge und der Kurventäler eine zweite Eingriffstiefe der Kurvenscheiben der zweiten Getriebestufe definiert, wobei die erste Eingriffstiefe kleiner ist als die zweite Eingriffstiefe. Es hat sich gezeigt, dass eine identische Ausbildung der Kurvenscheiben der ersten und der zweiten Getriebestufe aufgrund der hohen Antriebsdrehzahl zu einer vergleichsweise starken Geräuschentwicklung führt. Durch eine Reduzierung der ersten Eingriffstiefe im Vergleich zur zweiten Eingriffstiefe kann eine Geschwindigkeit im Kontaktpunkt zwischen den Kurvenscheiben der ersten Getriebestufe und dem Bolzenring reduziert werden.

Um die Exzentrizität der Kurvenscheiben der ersten Getriebestufe verkleinern zu können hat es sich als besonders vorteilhaft erwiesen, wenn die Kurvenscheiben der ersten Getriebestufe auf einer ersten Kreisbahn angeordnete Bohrungen aufweisen, in denen die Mitnehmerbolzen der ersten Getriebestufe abwälzen und wenn die Kurvenscheiben der zweiten Getriebestufe auf einer zweiten Kreisbahn angeordnete Bohrungen aufweisen, in denen die Mitnehmerbolzen der zweiten Getriebestufe abwälzen, wobei die erste Kreisbahn einen ersten Kreisbahndurchmesser aufweist und wobei die zweite Kreisbahn einen zweiten Kreisbahndurchmesser aufweist, wobei der erste Kreisbahndurchmesser kleiner ist als der zweite Kreisbahndurchmesser.

Besonders bevorzugt ist es dabei, wenn die Bohrungen der Kurvenscheiben der ersten Getriebestufe einen ersten Innendurchmesser aufweisen und wenn die Bohrungen der Kurvenscheiben der zweiten Getriebestufe einen zweiten Innendurchmesser aufweisen, wobei der erste Innendurchmesser kleiner ist als der zweite Innendurchmesser.

Weitere Einzelheiten und vorteilhafte Weiterbildungen der Erfindung sind der nachfolgenden Beschreibung zu entnehmen, anhand derer verschiedene Ausführungsformen der Erfindung näher beschrieben und erläutert sind.

Es zeigen:
- Figur 1: einen Schnitt durch ein erfindungsgemäßes Zykloidgetriebe;
- Figur 2: einen vergrößerten Ausschnitt des Schnitts gemäß Figur 1;
- Figur 3: eine Schrägansicht von Teilen des Zykloidgetriebes gemäß der Figuren 1 und 2 in einer Darstellung ohne Getriebegehäuse;
- Figur 4: die Schrägansicht gemäß Figur 3 mit teilweise weggelassenen Wälzbolzen;
- Figur 5: eine Kurvenscheibe der ersten Getriebestufe des Zykloidgetriebes gemäß der Figuren 1 bis 4 in einer ersten Ausführungsform;
- Figur 6: eine Kurvenscheibe der zweiten Getriebestufe des Zykloidgetriebes gemäß der Figuren 1 bis 4 in einer ersten Ausführungsform;
- Figur 7: eine Kurvenscheibe der ersten Getriebestufe des Zykloidgetriebes gemäß der Figuren 1 bis 4 in einer zweiten Ausführungsform; und
- Figur 8: eine Kurvenscheibe der zweiten Getriebestufe des Zykloidgetriebes gemäß der Figuren 1 bis 4 in einer zweiten Ausführungsform.

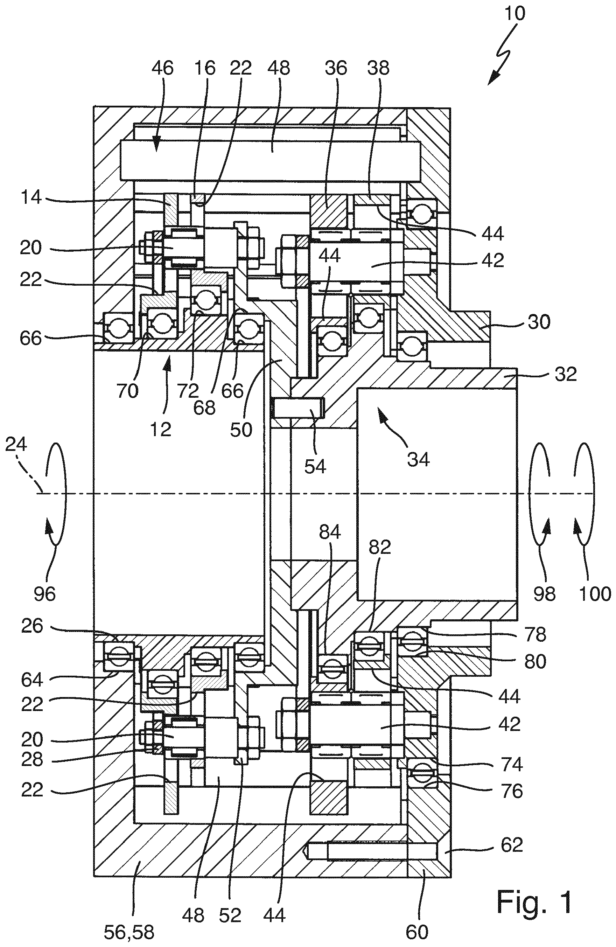

In den Figuren 1 bis 8 ist insgesamt ein erfindungsgemäßes Zykloidgetriebe 10 gezeigt.

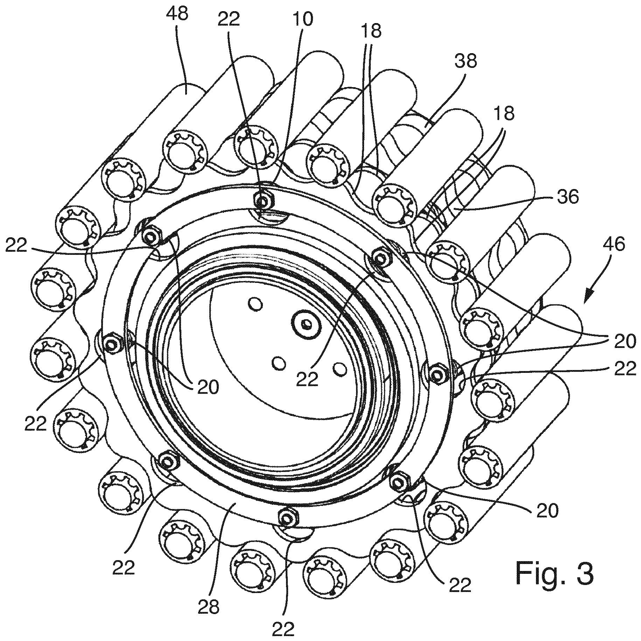

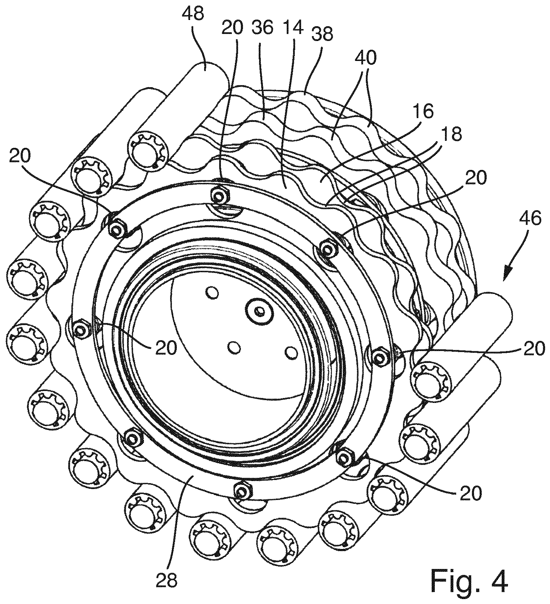

Das Zykloidgetriebe 10 weist eine erste Getriebestufe 12 mit einer ersten und einer zweiten Kurvenscheibe 14, 16 auf. Die erste und die zweite Kurvenscheibe 14, 16 weisen jeweils zykloidische Kurvenabschnitte 18 auf, die insbesondere in Figur 3 und 4 deutlich zu erkennen sind. Die Kurvenscheiben 14, 16 sind an ihrem jeweiligen Außenumfang derart identisch ausgebildet, dass die Kurvenabschnitte 18 der ersten und der zweiten Kurvenscheibe 14, 16 einander entsprechen.

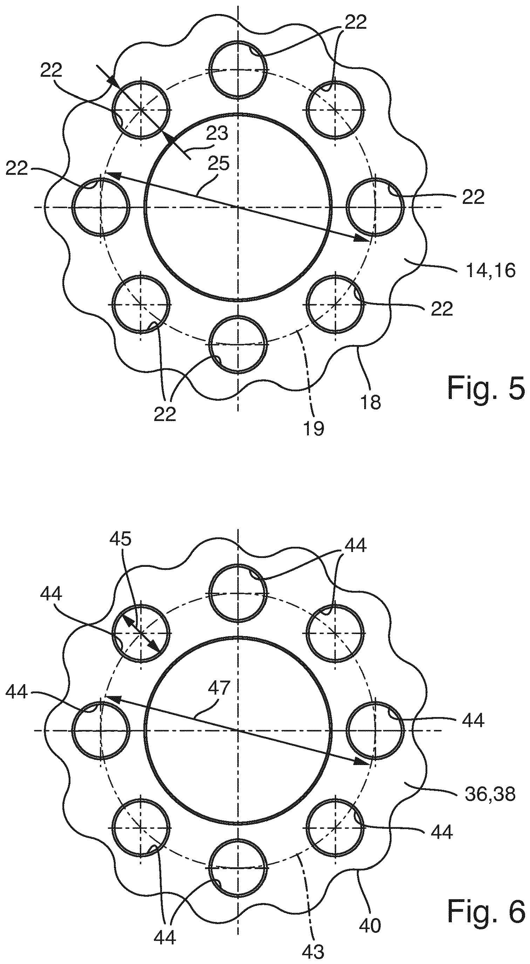

Die erste und die zweite Kurvenscheibe 14, 16 sind durch in den Figuren deutlich erkennbare Mitnehmerbolzen 20 gekoppelt. Hierzu weisen die Kurvenscheiben 14, 16 auf einer gedachten Kreisbahn 19 angeordnete Bohrungen 22 mit einem in Figur 5 gezeigten Innendurchmesser 23 auf, welcher größer ist als ein Außendurchmesser der Mitnehmerbolzen 20. Die Kreisbahn 19 weist einen Kreisbahndurchmesser 25 auf.

Das Zykloidgetriebe 10 weist ferner eine um eine Getriebeachse 24 drehbar antreibbare Antriebswelle 26 auf, die mit den Kurvenscheiben 14, 16 der ersten Getriebestufe 12 exzentrisch bewegungsgekoppelt ist. Die Antriebswelle 26 ist als Hohlwelle ausgebildet.

Wie in Figur 1 und in den Figuren 3 und 4 deutlich zu erkennen ist, sind die Mitnehmerbolzen 20 mit einem Mitnehmerbolzenring 28 verschraubt.

Das Zykloidgetriebe 10 weist ferner eine koaxial zur Getriebeachse 24 angeordnete erste Abtriebswelle 30 und eine zweite koaxial zur Getriebeachse 24 angeordnete Abtriebswelle 32 auf. Die erste und die zweite Abtriebswelle 30, 32 sind als Hohlwelle ausgebildet und konzentrisch zur Getriebeachse angeordnet, wobei die erste Abtriebswelle 30 die zweite Abtriebswelle 32 umgreift.

Das Zykloidgetriebe 10 weist eine zweite Getriebestufe 34 auf, welche ebenfalls eine in den Figuren deutlich erkennbare erste und zweite Kurvenscheibe 36, 38 aufweist. Die Kurvenscheiben 36, 38 weisen ebenfalls zykloidische Kurvenabschnitte 40 auf, die einander entsprechen. Die Kurvenabschnitte 18, 40 der in den Figuren 5 und 6 dargestellten Kurvenscheiben 14, 16, 36, 38 sind derart identisch ausgebildet, dass die Kurvenscheiben 14, 16, 36, 38 der ersten und der zweiten Getriebestufe 12, 34 an ihrem Außenumfang eine identische Kurvengeometrie aufweisen. Ferner sind die Kurvenscheiben 36, 38 durch eine Mehrzahl von Mitnehmerbolzen 42 gekoppelt, die mit der ersten Abtriebswelle 30 verschraubt sind. Hierzu weisen die Kurvenscheiben 36 ,38 ebenfalls auf einer gedachten Kreisbahn 43 angeordnete Bohrungen 44 auf, die einen in Figur 6 gezeigten Innendurchmesser 45 aufweisen, der größer ist als ein Außendurchmesser der Mitnehmerbolzen 42. Die erste Getriebestufe 12 und die zweite Getriebestufe 34 sind koaxial zur Getriebeachse 24 und in Achsrichtung hintereinander angeordnet. Die Innendurchmesser 23, 45 der Bohrungen 22, 44 der Kurvenscheiben 14, 16, 36, 38 der ersten und der zweiten Getriebestufe 12, 34 sind in den Figuren 5 und 6 identisch ausgebildet. Die Kreisbahn 43 weist einen Kreisbahndurchmesser 47 auf, der in den Figuren 5 und 6 identisch zum Kreisbahndurchmesser 25 ausgebildet ist.

Die Kurvenscheiben 36, 38 der zweiten Getriebestufe 34 sind mit der ersten Abtriebswelle exzentrisch bewegungsgekoppelt.

Die Kurvenscheiben 14, 16, 36, 38 der beiden Getriebestufen 12, 34 bzw. die Kurvenabschnitte 18,40 wälzen gemeinsam in einem konzentrisch zur Getriebeachse 24 angeordneten Bolzenring 46 ab. Hierzu weist der Bolzenring 46 eine Mehrzahl von parallel zur Getriebeachse 24 angeordneten Wälzbolzen 48 auf, die drehbar gelagert sind. Die Wälzbolzen 48 sind insbesondere in den Figuren 3 und 4 deutlich zu erkennen. Die Anzahl der Wälzbolzen 48 ist immer 1 (eins) größer als die Anzahl der Kurvenabschnitte 18, 40 der Kurvenscheiben 14, 16, 36, 38.

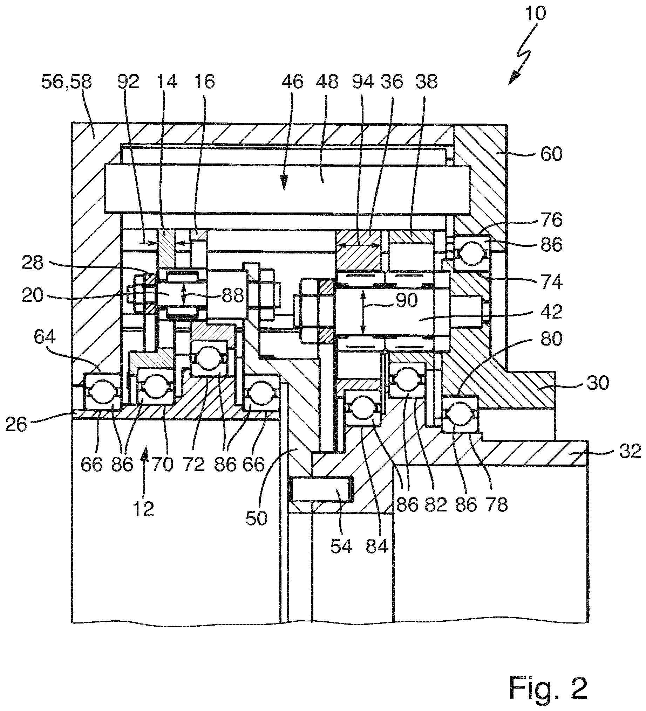

Wie sich insbesondere aus den Figuren 1 und 2 ergibt, sind die Kurvenscheiben 14, 16 der ersten Getriebestufe 12 mit der zweiten Abtriebswelle 32 exzentrisch bewegungsgekoppelt. Diese exzentrische Bewegungskopplung ergibt sich durch eine Verbindung der zweiten Abtriebswelle 32 mit einem Abtriebswellenflansch 50, welcher einen Ringbund 52 aufweist, der mit den Mitnehmerbolzen 20 der ersten Getriebestufe 12 verschraubt ist. Diese exzentrische Bewegungskopplung des Abtriebswellenflansches 50 erfolgt über die Mitnehmerbolzen 20 der ersten Getriebestufe 12.

Der Abtriebswellenflansch 50 ist wiederum mit der zweiten Abtriebswelle 32 mittels wenigstens eines Sicherungsstiftes 54 bei Drehung um die Getriebeachse 24 drehfest verbunden und somit mit der zweiten Abtriebswelle drehgekoppelt.

Um Schmutz und andere Verunreinigungen von dem Zykloidgetriebe 10 fernzuhalten, ist ein Getriebegehäuse 56 vorgesehen, das ein Getriebegrundgehäuse 58 und einen Getriebegehäusedeckel 60 umfasst, welcher mit dem Getriebegrundgehäuse 58 mittels schematisch gezeigter Schrauben 62 verschraubt ist. Das Getriebegrundgehäuse 58 sowie die Antriebswelle 26 weisen konzentrisch zur Getriebeachse 24 angeordnete Lagerabschnitte 64, 66 zur Lagerung der Antriebswelle 26 im Getriebegrundgehäuse 58 auf.

Darüber hinaus weist die Antriebswelle 26 einen konzentrisch zur Getriebeachse 24 angeordneten Lagerabschnitt 66 auf, mittels dem die Antriebswelle 26 in einem konzentrisch zur Getriebeachse 24 angeordneten Lagerabschnitt 68 des Abtriebswellenflansches 50 angeordnet ist.

Zur exzentrischen Bewegungskopplung der Antriebswelle 26 und der ersten und zweiten Kurvenscheibe 14, 16 der ersten Getriebestufe 12 weist die Antriebswelle 26 exzentrische zur Getriebeachse 24 angeordnete Lagerabschnitte 70, 72 auf.

Die erste Abtriebswelle 30 weist einen konzentrisch zur Getriebeachse 24 angeordneten Lagerabschnitt 74 auf, mittels dem die erste Abtriebswelle 30 in einem konzentrisch zur Getriebeachse 24 angeordneten Lagerabschnitt 76 des Getriebegehäusedeckels 60 gelagert ist.

Die zweite Abtriebswelle 32 weist wiederum einen konzentrisch zur Getriebeachse 24 angeordneten Lagerabschnitt 78 auf, mittels dem die zweite Abtriebswelle 32 in einem konzentrisch zur Getriebeachse 24 angeordneten Lagerabschnitt 80 der ersten Abtriebswelle 30 gelagert ist.

Zur exzentrischen Bewegungskopplung der ersten Getriebestufe 12 und der zweiten Getriebestufe 34, weist die zweite Abtriebswelle 32 exzentrisch zur Getriebeachse 24 angeordnete Lagerabschnitte 82, 84 auf, wobei die erste Kurvenscheibe 36 der zweiten Getriebestufe 34 exzentrisch am Lagerabschnitt 84 gelagert ist und wobei die zweite Kurvenscheibe 38 der zweiten Getriebestufe 34 exzentrisch am Lagerabschnitt 82 gelagert ist.

Die Lagerung der Antriebswelle 26, der Abtriebswellen 30, 32, sowie der Kurvenscheiben 14, 16, 36, 38 erfolgt sämtlich durch an den entsprechenden Lagerabschnitten angeordnete Wälzlager 86, die bspw. als Kugel- oder Rollenlager ausgebildet sind.

Die Lagerabschnitte sowie die Wälzlager 86 sind zur besseren Übersicht in dem vergrößerten Ausschnitt der Figur 2 nochmals gekennzeichnet.

Die Mitnehmerbolzen 20 der ersten Getriebestufe 12 weisen einen ersten Mitnehmerbolzendurchmesser 88, wobei die Mitnehmerbolzen 42 der zweiten Getriebestufe 34 einen zweiten Mitnehmerbolzendurchmesser 90 aufweisen. Ferner weisen die Kurvenscheiben 14, 16 der ersten Getriebestufe 12 in Richtung der Getriebeachse 24 eine erste Dicke 92 auf, wobei die Kurvenscheiben 36, 38 der zweiten Getriebestufe 34 in Richtung der Getriebeachse 24 eine zweite Dicke 94 aufweisen.

Da mit der ersten Getriebestufe 12 lediglich eine erste Untersetzung von der Antriebswelle 26 auf den Abtriebswellenflansch 50 und die damit drehfest verbundene zweite Abtriebswelle 32 erfolgt, sind die auf die zweite Abtriebswelle 32 übertragenen Drehmomente kleiner als die auf die erste Abtriebswelle 30 übertragenen Drehmomente, da auf die zweite Abtriebswelle 30 die Untersetzung der ersten Getriebestufe 12 und der zweiten Getriebestufe 34 wirkt.

Daher ist der Mitnehmerbolzendurchmesser 90 der zweiten Getriebestufe 34 größer als der Mitnehmerbolzendurchmesser 88 der ersten Getriebestufe, wobei die Dicke 94 der Kurvenscheiben 36, 38 der zweiten Getriebestufe 34 größer ist als die Dicke 92 der Kurvenscheiben 14, 16 der ersten Getriebestufe.

Das Zykloidgetriebe 10 funktioniert wie folgt:
Wenn die Antriebswelle 26 mittels eines geeigneten Antriebs, bpsw. mittels eines in den Figuren nicht gezeigten Elektromotors in Rotation in Richtung des Pfeils 96 versetzt wird, werden die Kurvenscheiben 14, 16 der ersten Getriebestufe 12 aufgrund der exzentrischen Bewegungskopplung und der exzentrischen Lagerung auf der Antriebswelle 26 in eine Taumelbewegung versetzt und wälzen über die Wälzbolzen 48 des Bolzenrings 46 ab.

Da die Kurvenscheiben 14, 16 der ersten Getriebestufe 12 n Kurvenabschnitte 18 aufweisen und der Bolzenring 46 n+1 Wälzbolzen 48 aufweist, bewegen sich die Kurvenscheiben 14, 16 der ersten Getriebestufe 12 bei jeder vollen Umdrehung der Antriebswelle 26 um einen Kurvenabschnitt 18 weiter.

Die Kurvenscheiben 14, 16 der ersten Getriebestufe 12 sind dabei mit dem Abtrieswellenflansch 50 und mittels der Sicherungsstifte 54 mit der zweiten Abtriebswelle 32 gekoppelt, wobei die zweite Abtriebswelle 32 in einer durch den Pfeil 98 gezeigten, der durch den Pfeil 96 wiedergegebenen Antriebsrichtung entgegengesetzten Richtung, angetrieben wird.

Aufgrund der exzentrischen Bewegungskopplung der zweiten Abtriebswelle 32 mit den Kurvenscheiben 36, 38 der zweiten Getriebestufe 34 führt eine Rotation der zweiten Abtriebswelle 32 bzw. des Abtriebswellenflansches 50 zu einer Taumelbewegung der Kurvenscheiben 36, 38, welche über die Wälzbolzen 48 des Bolzenrings 46 abwälzen.

Da die Kurvenscheiben 36, 38 der zweiten Getriebestufe 34 n Kurvenabschnitte 40 aufweisen, die mit den Kurvenabschnitten 18 der Kurvenscheiben 14, 16 der ersten Getriebestufe identisch sind, und der Bolzenring 46 n+1 Wälzbolzen 48 aufweist, bewegen sich die Kurvenscheiben 36, 38 der zweiten Getriebestufe 34 bei jeder vollen Umdrehung der zweiten Abtriebswelle 32 um einen Kurvenabschnitt 40 weiter.

Auf diese Weise kann eine weitere Untersetzung der zweiten Getriebestufe 34 bei kleinen Drehzahlen erreicht werden. Die Kurvenscheiben 36, 38 der zweiten Getriebestufe 34 sind mittels der Mitnehmerbolzen 42 mit der ersten Abtriebswelle 30 bewegungsgekoppelt, wobei die erste Abtriebswelle 30 in einer durch den Pfeil 100 gezeigten, der durch den Pfeil 96 entsprechenden Antriebsrichtung, angetrieben wird.

Somit kann an der ersten Abtriebswelle 30 eine kombinierte Untersetzung der ersten Getriebestufe 12 und der zweiten Getriebestufe 34 bereitgestellt werden, wobei die erste Abtriebswelle 30 dieselbe Drehrichtung wie die Antriebswelle 26 aufweist.

Dabei ist denkbar, dass eine Kupplung vorgesehen ist, mittels derer ein Abtrieb schaltbar zwischen der ersten Abtriebswelle 30 und der zweiten Abtriebswelle 32 gewählt werden kann, so dass entweder nur die Drehzahl und Drehrichtung der zweiten Abtriebswelle 32 (Untersetzung der ersten Getriebestufe 12) oder die Drehzahl und Drehrichtung der ersten Abtriebswelle 30 (Untersetzung der ersten Getriebestufe 12 und der zweiten Getriebestufe 34) abgegriffen werden kann.

In einer alternativen Ausführungsform des Zykloidgetriebes 10 sind die Kurvenscheiben 14, 16, 36, 38 der ersten Getriebestufe 12 und der zweiten Getriebestufe 34 nicht, wie in den Figuren 5 und 6 gezeigt, am Außenumfang identisch ausgebildet.

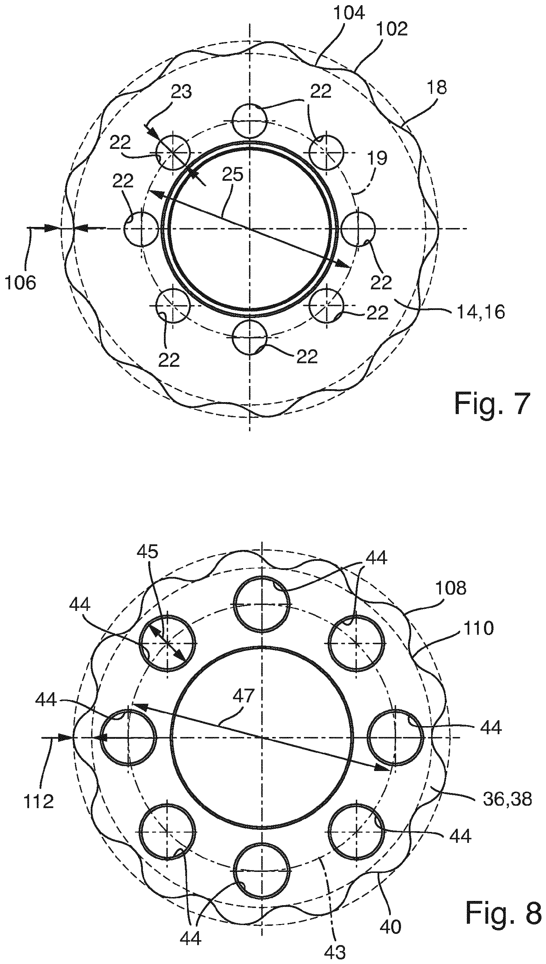

Wie in den Figuren 7 und 8 deutlich zu erkennen ist, weisen die Kurvenabschnitte 18 der Kurvenscheiben 14, 16 der ersten Getriebestufe 12 Kurvenberge 102 und Kurventäler 104 auf, wobei ein radialer Abstand der Kurvenberge 102 und der Kurventäler 104 eine erste Eingriffstiefe 106 der Kurvenscheiben 14, 16 der ersten Getriebestufe 12 definiert. Ferner weisen die Kurvenabschnitte 40 der Kurvenscheiben 36, 38 der zweiten Getriebestufe 34 Kurvenberge 108 und Kurventäler 110 umfassen, wobei ein radialer Abstand der Kurvenberge 108 und der Kurventäler 110 eine zweite Eingriffstiefe 112 der Kurvenscheiben 36, 38 der zweiten Getriebestufe 34 definiert, wobei die erste Eingriffstiefe 106 kleiner ist als die zweite Eingriffstiefe 112.

Ferner weisen die Kurvenscheiben 14, 16 der ersten Getriebestufe 12 auf einer ersten Kreisbahn 19 angeordnete Bohrungen 22 auf, in denen die Mitnehmerbolzen 20 der ersten Getriebestufe 12 abwälzen wobei die Kurvenscheiben 36, 38 der zweiten Getriebestufe 34 auf einer zweiten Kreisbahn 43 angeordnete Bohrungen 44 aufweisen, in denen die Mitnehmerbolzen 42 der zweiten Getriebestufe 34 abwälzen, wobei die erste Kreisbahn 19 einen ersten Kreisbahndurchmesser 25 aufweist und wobei die zweite Kreisbahn 43 einen zweiten Kreisbahndurchmesser 47 aufweist, wobei der erste Kreisbahndurchmesser 25 kleiner ist als der zweite Kreisbahndurchmesser 47.

Die Bohrungen 22 der Kurvenscheiben 14, 16 der ersten Getriebestufe 12 weisen dabei einen ersten Innendurchmesser 23 auf, wobei die Bohrungen 44 der Kurvenscheiben 36, 38 der zweiten Getriebestufe 34 einen zweiten Innendurchmesser 45 aufweisen, wobei der erste Innendurchmesser 23 kleiner ist als der zweite Innendurchmesser 45.

Es hat sich gezeigt, dass eine identische Ausbildung der Kurvenscheiben 14, 16, 36, 38 der ersten und der zweiten Getriebestufe 12, 34 aufgrund der hohen Antriebsdrehzahl zu einer vergleichsweise starken Geräuschentwicklung führt. Durch eine Reduzierung der ersten Eingriffstiefe 106 im Vergleich zur zweiten Eingriffstiefe 112 sowie durch eine Verringerung der Exzentrizität der Kurvenscheiben 14, 16 der ersten Getriebestufe 12 kann eine Geschwindigkeit im Kontaktpunkt zwischen den Kurvenscheiben 14, 16 der ersten Getriebestufe 12 und dem Bolzenring 46 und eine damit einhergehende Geräuschentwicklung reduziert werden.

Insgesamt kann mit dem erfindungsgemäßen Zykloidgetriebe 10 ein kompaktes und kostengünstiges Zykloidgetriebe 10 bereitgestellt werden, das große Untersetzungen bei großen übertragbaren Drehmomenten ermöglicht.

## Patentansprüche

1. Zykloidgetriebe (10) mit einer ersten Getriebestufe (12), die eine erste (14) und eine zweite (16) jeweils Kurvenabschnitte (18) aufweisende Kurvenscheibe (14, 16) aufweist, welche durch eine Mehrzahl von Mitnehmerbolzen (20) gekoppelt sind, mit einer um eine Getriebeachse (24) drehbar antreibbaren Antriebswelle (26), die mit den Kurvenscheiben (14, 16) der ersten Getriebestufe (12) exzentrisch bewegungsgekoppelt ist, und mit wenigstens einer ersten koaxial zur Getriebeachse (24) angeordneten Abtriebswelle (30), wobei eine zweite Getriebestufe (34) vorgesehen ist, die eine erste (36) und eine zweite (38) jeweils Kurvenabschnitte (40) aufweisende Kurvenscheibe (36, 38) aufweist, welche durch eine Mehrzahl von Mitnehmerbolzen (42) gekoppelt sind, wobei die Kurvenscheiben (36, 38) der zweiten Getriebestufe (34) mit der ersten Abtriebswelle (30) exzentrisch bewegungsgekoppelt sind, **dadurch gekennzeichnet, dass** ein konzentrisch zur Getriebeachse (24) angeordneter Bolzenring (46), der eine Mehrzahl von parallel zur Getriebeachse (24) angeordneten, drehbar gelagerten Wälzbolzen (48) aufweist, vorgesehen ist und dass die Kurvenscheiben (14, 16) der ersten Getriebestufe (12) und die Kurvenscheiben (36, 38) der zweiten Getriebestufe (34) derart angeordnet und ausgebildet sind, dass die Kurvenscheiben (14, 16, 36, 38) beider Getriebestufen (12, 34) gemeinsam an den Wälzbolzen (48) im Bolzenring (46) abwälzen.

2. Zykloidgetriebe (10) nach Anspruch 1, **dadurch gekennzeichnet, dass** die erste Getriebestufe (12) und die zweite Getriebestufe (34) koaxial zur Getriebeachse (24) und in Achsrichtung hintereinander angeordnet sind.

3. Zykloidgetriebe (10) nach Anspruch 1 oder 2, **dadurch gekennzeichnet, dass** die erste und die zweite Kurvenscheibe (14, 16) der ersten Getriebestufe (12) exzentrisch zur Getriebeachse (24) auf der Antriebswelle (26) gelagert sind.

4. Zykloidgetriebe (10) nach wenigstens einem der vorherigen Ansprüche, **dadurch gekennzeichnet, dass** die Antriebswelle (26) als Hohlwelle ausgebildet ist.

5. Zykloidgetriebe (10) nach wenigstens einem der vorherigen Ansprüche, **dadurch gekennzeichnet, dass** ein Getriebegehäuse (56) vorgesehen ist und dass die Antriebswelle (26) konzentrisch zur Getriebeachse (26) angeordnete Lagerabschnitte (66) zur Lagerung der Antriebswelle (26) im Getriebegehäuse (56) aufweist.

6. Zykloidgetriebe (10) nach Anspruch 5, **dadurch gekennzeichnet, dass** die erste Abtriebswelle (30) konzentrisch zur Getriebeachse (24) angeordnete Lagerabschnitte (74) zur Lagerung der ersten Abtriebswelle (30) im Getriebegehäuse (56) aufweist.

7. Zykloidgetriebe (10) nach wenigstens einem der vorherigen Ansprüche, **dadurch gekennzeichnet, dass** eine zweite koaxial zur Getriebeachse (24) angeordnete Abtriebswelle (32) vorgesehen ist, wobei die Kurvenscheiben (14, 16) der ersten Getriebestufe (12) mit der zweiten Abtriebswelle (32) exzentrisch bewegungsgekoppelt sind.

8. Zykloidgetriebe (10) nach Anspruch 7, **dadurch gekennzeichnet, dass** die erste und die zweite Kurvenscheibe (36, 38) der zweiten Getriebestufe (34) exzentrisch zur Getriebeachse (24) auf der zweiten Abtriebswelle (32) gelagert sind.

9. Zykloidgetriebe (10) nach Anspruch 7 oder 8, **dadurch gekennzeichnet, dass** die erste und die zweite Abtriebswelle (30, 32) als Hohlwelle ausgebildet und konzentrisch zur Getriebesachse (24) angeordnet sind, wobei die erste Abtriebswelle (30) die zweite Abtriebswelle zumindest abschnittsweise umgreift (32).

10. Zykloidgetriebe (10) nach wenigstens einem der Ansprüche 7 bis 9, **dadurch gekennzeichnet, dass** die zweite Abtriebswelle (32) einen konzentrisch zur Getriebeachse (24) angeordneten Lagerabschnitt (78) zur Lagerung der ersten Abtriebswelle (30) aufweist.

11. Zykloidgetriebe nach wenigstens einem der Ansprüche 7 bis 10, **dadurch gekennzeichnet, dass** die erste Getriebestufe (12) einen Abtriebswellenflansch (50) aufweist, wobei die Mitnehmerbolzen (20) der ersten Getriebestufe (12) mit dem Abtriebswellenflansch (50) der ersten Getriebestufe (12) drehfest gekoppelt sind und wobei der Abtriebswellenflansch (50) mit der zweiten Abtriebswelle (32) drehgekoppelt ist.

12. Zykloidgetriebe (10) nach wenigstens einem der vorherigen Ansprüche, **dadurch gekennzeichnet, dass** die Kurvenscheiben (14, 16) der ersten Getriebestufe (12) in Richtung der Getriebeachse (24) eine erste Dicke (92) aufweisen, wobei die Kurvenscheiben (36, 38) der zweiten Getriebestufe (34) in Richtung der Getriebeachse (24) eine zweite Dicke (94) aufweisen, wobei die zweite Dicke (94) größer ist als die erste Dicke (92).

13. Zykloidgetriebe (10) nach Anspruch 12, **dadurch gekennzeichnet, dass** die zweite Dicke (94) zur ersten Dicke (92) in einem Verhältnis im Bereich von etwa 1,5:1 bis etwa 4:1 steht.

14. Zykloidgetriebe (10) nach wenigstens einem der vorherigen Ansprüche, **dadurch gekennzeichnet, dass** die Kurvenscheiben (14, 16, 36, 38) der ersten Getriebestufe (12) und der zweiten Getriebestufe (34) eine identische Kurvengeometrie aufweisen.

15. Zykloidgetriebe (10) nach wenigstens einem der Ansprüche 1 bis 13, **dadurch gekennzeichnet, dass** die Kurvenabschnitte (18) der Kurvenscheiben (14, 16) der ersten Getriebestufe (12) Kurvenberge (102) und Kurventäler (104) umfassen, wobei ein radialer Abstand der Kurvenberge (102) und der Kurventäler (104) eine erste Eingriffstiefe (106) der Kurvenscheiben (14, 16) der ersten Getriebestufe (12) definiert, und dass die Kurvenabschnitte (40) der Kurvenscheiben (36, 38) der zweiten Getriebestufe (34) Kurvenberge (108) und Kurventäler (110) umfassen, wobei ein radialer Abstand der Kurvenberge (108) und der Kurventäler (110) eine zweite Eingriffstiefe (112) der Kurvenscheiben (36, 38) der zweiten Getriebestufe (34) definiert, wobei die erste Eingriffstiefe (106) kleiner ist als die zweite Eingriffstiefe (112).

16. Zykloidgetriebe (10) nach Anspruch 15, **dadurch gekennzeichnet, dass** die Kurvenscheiben (14, 16) der ersten Getriebestufe (12) auf einer ersten Kreisbahn (19) angeordnete Bohrungen (22) aufweisen, in denen die Mitnehmerbolzen (20) der ersten Getriebestufe (12) abwälzen und dass die Kurvenscheiben (36, 38) der zweiten Getriebestufe (34) auf einer zweiten Kreisbahn (43) angeordnete Bohrungen (44) aufweisen, in denen die Mitnehmerbolzen (42) der zweiten Getriebestufe (34) abwälzen, wobei die erste Kreisbahn (19) einen ersten Kreisbahndurchmesser (25) aufweist und wobei die zweite Kreisbahn (43) einen zweiten Kreisbahndurchmesser (47) aufweist, wobei der erste Kreisbahndurchmesser (25) kleiner ist als der zweite Kreisbahndurchmesser (47).

17. Zykloidgetriebe (10) nach Anspruch 15 oder 16, **dadurch gekennzeichnet, dass** die Bohrungen (22) der Kurvenscheiben (14, 16) der ersten Getriebestufe (12) einen ersten Innendurchmesser (23) aufweisen und dass die Bohrungen (44) der Kurvenscheiben (36, 38) der zweiten Getriebestufe (34) einen zweiten Innendurchmesser (45) aufweisen, wobei der erste Innendurchmesser (23) kleiner ist als der zweite Innendurchmesser (45).

## Claims

1. Cycloid gear (10) comprising a first gear stage (12) which has a first (14) and a second (16) cam disc (14, 16) each having cam portions (18), which cam discs are coupled by a plurality of driving pins (20), comprising a drive shaft (26) which can be driven so as to rotate about a gear axis (24) and which is eccentrically movement-coupled to the cam discs (14, 16) of the first gear stage (12), and comprising at least one first output shaft (30) arranged coaxially with respect to the gear axis (24), a second gear stage (34) being provided which has a first (36) and a second (38) cam disc (36, 38) each having cam portions (40), which cam discs are coupled by a plurality of driving pins (42), the cam discs (36, 38) of the second gear stage (34) being eccentrically movement-coupled to the first output shaft (30), **characterized in that** a pin ring (46) arranged concentrically with respect to the gear axis (24) is provided, which pin ring comprises a plurality of rotatably mounted rolling bearings (48) arranged in parallel with the gear axis (24), and **in that** the cam discs (14, 16) of the first gear stage (12) and the cam discs (36, 38) of the second gear stage (34) are arranged and designed such that the cam discs (14, 16, 36, 38) of the two gear stages (12, 34) roll together on the rolling pin (48) in the pin ring (46).

2. Cycloid gear (10) according to claim 1, **characterized in that** the first gear stage (12) and the second gear stage (34) are arranged coaxially with respect to the gear axis (24) and one behind the other in the axial direction.

3. Cycloid gear (10) according to claim 1 or claim 2, **characterized in that** the first and the second cam discs (14, 16) of the first gear stage (12) are mounted on the drive shaft (26) eccentrically with respect to the gear axis (24).

4. Cycloid gear (10) according to at least one of the preceding claims, **characterized in that** the drive shaft (26) is designed as a hollow shaft.

5. Cycloid gear (10) according to at least one of the preceding claims, **characterized in that** a gear housing (56) is provided and **in that** the drive shaft (26) comprises bearing portions (66) which are arranged concentrically with respect to the gear axis (26) and intended for bearing the drive shaft (26) in the gear housing (56).

6. Cycloid gear (10) according to claim 5, **characterized in that** the first output shaft (30) comprises bearing portions (74) which are arranged concentrically with respect to the gear axis (24) and intended for bearing the first output shaft (30) in the gear housing (56).

7. Cycloid gear (10) according to at least one of the preceding claims, **characterized in that** a second output shaft (32) arranged coaxially with respect to the gear axis (24) is provided, the cam discs (14, 16) of the first gear stage (12) being eccentrically movement-coupled to the second output shaft (32).

8. Cycloid gear (10) according to claim 7, **characterized in that** the first and the second cam discs (36, 38) of the second gear stage (34) are mounted on the second output shaft (32) eccentrically with respect to the gear axis (24).

9. Cycloid gear (10) according to claim 7 or claim 8, **characterized in that** the first and the second output shafts (30, 32) are designed as hollow shafts and are arranged concentrically with respect to the gear axis (24), the first output shaft (30) surrounding the second output shaft (32) at least in portions.

10. Cycloid gear (10) according to at least one of claims 7 to 9, **characterized in that** the second output shaft (32) has a bearing portion (78) which is arranged concentrically with respect to the gear axis (24) and intended for bearing the first output shaft (30).

11. Cycloid gear according to at least one of claims 7 to 10, **characterized in that** the first gear stage (12) has an output shaft flange (50), the driving pins (20) of the first gear stage (12) being coupled to the output shaft flange (50) of the first gear stage (12) for conjoint rotation and the output shaft flange (50) being rotationally coupled to the second output shaft (32).

12. Cycloid gear (10) according to at least one of the preceding claims, **characterized in that** the cam discs (14, 16) of the first gear stage (12) have a first thickness (92) in the direction of the gear axis (24), the cam discs (36, 38) of the second gear stage (34) having a second thickness (94) in the direction of the gear axis (24),
the second thickness (94) being greater than the first thickness (92).

13. Cycloid gear (10) according to claim 12, **characterized in that** the ratio of the second thickness (94) to the first thickness (92) is in the range of approximately 1.5:1 to approximately 4:1.

14. Cycloid gear (10) according to at least one of the preceding claims, **characterized in that** the cam discs (14, 16, 36, 38) of the first gear stage (12) and of the second gear stage (34) have an identical cam geometry.

15. Cycloid gear (10) according to at least one of claims 1 to 13, **characterized in that** the cam portions (18) of the cam discs (14, 16) of the first gear stage (12) comprise cam peaks (102) and cam troughs (104), a radial distance between the cam peaks (102) and the cam troughs (104) defining a first engagement depth (106) of the cam discs (14, 16) of the first gear stage (12), and **in that** the cam portions (40) of the cam discs (36, 38) of the second gear stage (34) comprise cam peaks (108) and cam troughs (110), a radial distance between the cam peaks (108) and the cam troughs (110) defining a second engagement depth (112) of the cam discs (36, 38) of the second gear stage (34), the first engagement depth (106) being less than the second engagement depth (112).

16. Cycloid gear (10) according to claim 15, **characterized in that** the cam discs (14, 16) of the first gear stage (12) have bores (22) arranged on a first circular path (19), in which bores the driving pins (20) of the first gear stage (12) roll, and **in that** the cam discs (36, 38) of the second gear stage (34) have bores (44) arranged on a second circular path (43), in which bores the driving pins (42) of the second gear stage (34) roll, the first circular path (19) having a first circular path diameter (25) and the second circular path (43) having a second circular path diameter (47), the first circular path diameter (25) being smaller than the second circular path diameter (47).

17. Cycloid gear (10) according to claim 15 or claim 16, **characterized in that** the bores (22) in the cam discs (14, 16) of the first gear stage (12) have a first inner diameter (23) and **in that** the bores (44) in the cam discs (36, 38) of the second gear stage (34) have a second inner diameter (45), the first inner diameter (23) being smaller than the second inner diameter (45).

## Revendications

1. Transmission cycloïde (10) pourvue d'un premier étage de transmission (12), qui présente une première (14) et une deuxième (16) came (14, 16) présentant respectivement des parties courbes (18), lesquelles cames sont accouplées par une pluralité de boulons d'entraînement (20), d'un arbre d'entraînement (26) qui peut être entraîné en rotation autour d'un axe de transmission (24) et qui est accouplé en mouvement de manière excentrée aux cames (14, 16) du premier étage de transmission (12), et d'au moins un premier arbre de sortie (30) agencé de manière coaxiale par rapport à l'axe de transmission (24), dans laquelle un deuxième étage de transmission (34) est prévu, qui présente une première (36) et une deuxième (38) came (36, 38) présentant respectivement des parties courbes (40), lesquelles cames sont accouplées par une pluralité de boulons d'entraînement (42), dans laquelle les cames (36, 38) du deuxième étage de transmission (34) sont accouplées en mouvement de manière excentrée au premier arbre de sortie (30), **caractérisée en ce qu'**un anneau de boulon (46) qui est agencé de manière concentrique par rapport à l'axe de transmission (24) et qui présente une pluralité de boulons roulants (48) montés en rotation et agencés parallèlement à l'axe de transmission (24) est prévu, et **en ce que** les cames (14, 16) du premier étage de transmission (12) et les cames (36, 38) du deuxième étage de transmission (34) sont agencées et conçues de telle sorte que les cames (14, 16, 36, 38) des deux étages de transmission (12, 34) roulent conjointement sur les boulons roulants (48) dans l'anneau de boulon (46).

2. Transmission cycloïde (10) selon la revendication 1, **caractérisée en ce que** le premier étage de transmission (12) et le deuxième étage de transmission (34) sont agencés l'un derrière l'autre de manière coaxiale par rapport à l'axe de transmission (24) et dans la direction axiale.

3. Transmission cycloïde (10) selon la revendication 1 ou 2, **caractérisée en ce que** la première et la deuxième came (14, 16) du premier étage de transmission (12) sont montées sur l'arbre d'entraînement (26) de manière excentrée par rapport à l'axe de transmission (24).

4. Transmission cycloïde (10) selon au moins l'une des revendications précédentes, **caractérisée en ce que** l'arbre d'entraînement (26) est réalisé sous la forme d'un arbre creux.

5. Transmission cycloïde (10) selon au moins l'une des revendications précédentes, **caractérisée en ce qu'**un carter de transmission (56) est prévu et **en ce que** l'arbre d'entraînement (26) présente des parties de support (66) agencées de manière concentrique par rapport à l'axe de transmission (26) et destinées à servir de support à l'arbre d'entraînement (26) dans le carter de transmission (56).

6. Transmission cycloïde (10) selon la revendication 5, **caractérisée en ce que** le premier arbre de sortie (30) présente des parties de support (74) agencées de manière concentrique par rapport à l'axe de transmission (24) et destinées à servir de support au premier arbre de sortie (30) dans le carter de transmission (56).

7. Transmission cycloïde (10) selon au moins l'une des revendications précédentes, **caractérisée en ce qu'**un deuxième arbre de sortie (32) agencé de manière coaxiale par rapport à l'axe de transmission (24) est prévu, dans laquelle les cames (14, 16) du premier étage de transmission (12) sont accouplées en mouvement au deuxième arbre de sortie (32) de manière excentrée.

8. Transmission cycloïde (10) selon la revendication 7, **caractérisée en ce que** la première et la deuxième came (36, 38) du deuxième étage de transmission (34) sont montées sur le deuxième arbre de sortie (32) de manière excentrée par rapport à l'axe de transmission (24).

9. Transmission cycloïde (10) selon la revendication 7 ou 8, **caractérisée en ce que** le premier et le deuxième arbre de sortie (30, 32) sont réalisés sous la forme d'un arbre creux et sont agencés de manière concentrique par rapport à l'axe de transmission (24), dans laquelle le premier arbre de sortie (30) entoure au moins en partie le deuxième arbre de sortie.

10. Transmission cycloïde (10) selon au moins l'une des revendications 7 à 9, **caractérisée en ce que** le deuxième arbre de sortie (32) présente une partie de support (78) agencée de manière concentrique par rapport à l'axe de transmission (24) et destinée à servir de support au premier arbre de sortie (30).

11. Transmission cycloïde selon au moins l'une des revendications 7 à 10, **caractérisée en ce que** le premier étage de transmission (12) présente une bride d'arbre de sortie (50), dans laquelle les boulons d'entraînement (20) du premier étage de transmission (12) sont accouplés de manière solidaire en rotation à la bride d'arbre de sortie (50) du premier étage de transmission (12) et dans laquelle la bride d'arbre de sortie (50) est accouplée en rotation au deuxième arbre de sortie (32).

12. Transmission cycloïde (10) selon au moins l'une des revendications précédentes, **caractérisée en ce que** les cames (14, 16) du premier étage de transmission (12) présentent en direction de l'axe de transmission (24) une première épaisseur (92), dans laquelle les cames (36, 38) du deuxième étage de transmission (34) présentent en direction de l'axe de transmission (24) une deuxième épaisseur (94), dans laquelle la deuxième épaisseur (94) est supérieure à la première épaisseur (92).

13. Transmission cycloïde (10) selon la revendication 12, **caractérisée en ce que** la deuxième épaisseur (94) se trouve par rapport à la première épaisseur (92) dans un rapport dans la plage d'environ 1,5:1 à environ 4:1.

14. Transmission cycloïde (10) selon au moins l'une des revendications précédentes, **caractérisée en ce que** les cames (14, 16, 36, 38) du premier étage de transmission (12) et du deuxième étage de transmission (34) présentent une géométrie de courbe identique.

15. Transmission cycloïde (10) selon au moins l'une des revendications 1 à 13, **caractérisée en ce que** les parties courbes (18) des cames (14, 16) du premier étage de transmission (12) présentent des pics de courbe (102) et des creux de courbe (104), dans laquelle une distance radiale entre les pics de courbe (102) et les creux de courbe (104) définit une première profondeur de mise en prise (106) des cames (14, 16) du premier étage de transmission (12), et **en ce que** les parties courbes (40) des cames (36, 38) du deuxième étage de transmission (34) comportent des pics de courbe (108) et des creux de courbe (110), dans laquelle une distance radiale entre les pics de courbe (108) et les creux de courbe (110) définit une deuxième profondeur de mise en prise (112) des cames (36, 38) du deuxième étage de transmission (34), dans laquelle la première profondeur de mise en prise (106) est inférieure à la deuxième profondeur de mise en prise (112) .

16. Transmission cycloïde (10) selon la revendication 15, **caractérisée en ce que** les cames (14, 16) du premier étage de transmission (12) présentent des trous (22) situés sur une première trajectoire circulaire (19), dans lesquels les boulons d'entraînement (20) du premier étage de transmission (12) roulent et **en ce que** les cames (36, 38) du deuxième étage de transmission (34) présentent des trous (44) situés sur une deuxième trajectoire circulaire (43), dans lesquels roulent les boulons d'entraînement (42) du deuxième étage de transmission (34), dans laquelle la première trajectoire circulaire (19) présente un premier diamètre de trajectoire circulaire (25) et dans laquelle la deuxième trajectoire circulaire (43) présente un deuxième diamètre de trajectoire circulaire (47), dans laquelle le premier diamètre de trajectoire circulaire (25) est inférieur au deuxième diamètre de trajectoire circulaire (47).

17. Transmission cycloïde (10) selon la revendication 15 ou 16, **caractérisée en ce que** les trous (22) des cames (14, 16) du premier étage de transmission (12) présentent un premier diamètre intérieur (23) et **en ce que** les trous (44) des cames (36, 38) du deuxième étage de transmission (34) présentent un deuxième diamètre intérieur (45), dans laquelle le premier diamètre intérieur (23) est inférieur au deuxième diamètre intérieur (45).
